Europäisches Patentamt

European Patent Office

Office européen des brevets

(11) Veröffentlichungsnummer : **0 094 630 B2**

(12) **NEUE EUROPÄISCHE PATENTSCHRIFT**

(45) Veröffentlichungstag der neuen Patentschrift :
10.03.93 Patentblatt 93/10

(51) Int. Cl.$^5$ : **C01B 25/238**

(21) Anmeldenummer : 83104708.9

(22) Anmeldetag : 13.05.83

(54) **Verfahren zum Entfernen von Cadmium aus durch Aufschluss von Rohphosphaten mit Schwefelsäure erhaltener Rohphosphorsäure.**

(30) Priorität : 18.05.82 DE 3218599

(43) Veröffentlichungstag der Anmeldung :
23.11.83 Patentblatt 83/47

(45) Bekanntmachung des Hinweises auf die Patenterteilung :
16.07.86 Patentblatt 86/29

(45) Bekanntmachung des Hinweises auf die Entscheidung über den Einspruch :
10.03.93 Patentblatt 93/10

(84) Benannte Vertragsstaaten :
AT BE DE FR GB IT NL SE

(56) Entgegenhaltungen :
DE-B- 1 188 054
US-A- 3 458 282
Chemical Abstracts Band 76, Nr. 10, 6. März 1972, Columbus, Ohio, USA S. TONOUCHI et al. "Determination of cadmium by atomic absorption spectrometry combined with solvent extraction with high molecular weight amines", Seite 573, Spalte 2, Abstract Nr. 54043d
Chemical Abstracts Band 98, Nr. 8, 21. Februar 1983, Columbus, Ohio, USA S.P. RAO et al. "Solvent extraction of cadmium with N-butylaniline into chloroform from a mixture of potassium iodide and sulfuric acid media", Seite 409, Spalte 2, Abstract 60704r

(56) Entgegenhaltungen :
Chemical Abstracts Band 84, Nr. 2, 12. Januar 1976, Columbus, Ohio, USA A. ALIAN et al. "Solvent extraction studies on cadmium. II. Extraction and separation of microamounts of cadmium halides in absence and presence of phosphoric acid", Seite 334, Spalte 1, Abstract Nr Band 27, Nr.2, 1976, Seiten 411-420
Chemical Abstracts Band 95, Nr. 25, 21. Dezember 1981, Columbus, Ohio, USA T. SATO et al. "Extraction of bivalent manganese, cobalt, copper, zinc, and cadmium from hydrochloric acid solutions by long-chain alkyl quaternary ammonium chloride in various orgnanic solvents"
Patent Abstracts of Japan Band 4, Nr. 186, 20. Dezember 1980
Journal of Radioanalythical Chemistry, Vol. 27, (1975) S.383 bis 399 und 411 bis 420

(73) Patentinhaber : Chemische Fabrik Budenheim Rudolf A. Oetker
Am Rhein 6
W-6501 Budenheim (DE)

(72) Erfinder : Frankenfeld, Klaus, Dr.
Mainzer Landstrasse 48
W-6257 Hünfelden 1 (DE)
Erfinder : Ruschke, Peter, Dr.
Mombacherstrasse 60
W-6501 Budenheim (DE)
Erfinder : Brodt, Peter
Pfahlgrabenstrasse 50
W-6270 Idstein-Eschenhahn (DE)
Erfinder : Eich, Gerhard
Schubertstrasse 21
W-6507 Ingelheim (DE)

(74) Vertreter : Weinhold, Peter, Dr. et al
Patentanwälte Dr. V. Schmied-Kowarzik
Dipl.-Ing. G. Dannenberg Dr. P. Weinhold Dr. D. Gudel Dipl.-Ing. S. Schubert Dr. P. Barz
Siegfriedstrasse 8
W-8000 München 40 (DE)

EP 0 094 630 B2

Jouve, 18, rue Saint-Denis, 75001 PARIS

## Beschreibung

Diese Erfindung beschreibt ein Verfahren zur Entfernung von Cadmium-Ionen aus durch Aufschluß von Rohphosphaten mit Säure erhaltener Rohphosphorsäure durch Flüssig-Flüssig-Extraktion mit Hilfe von Alkylaminsalzen der Chlorwasserstoffsäure, Bromwasserstoffsäure oder Jodwasserstoffsäure die in einem inerten organischen Lösungsmittel gelöst sind.

Cadmium gehört zu den Schwermetallen, deren Verbreitung man vermindern will. Rohphosphaterze, die für die Herstellung von phosphathaltigen Düngemitteln verwendet werden, enthalten Cadmium. Durch den Aufschluss der Rohphosphate mit Säure gelangt das Cadmium als ein leichtlösliches Salz in die produzierte Phosphorsäure und bei der Weiterverarbeitung derselben zu Düngemittel in diese selbst. Dem Boden wird dadurch eine gewisse Menge an Cadmium zugeführt. Durch die jahrelange intensive Düngung erhöht sich der Cadmiumgehalt in den Böden. Um ein weiteres Anwachsen im Boden zu verhindern, ist es erforderlich, nur solche Düngemittel zu verwenden, die arm oder frei von dem Schwermetall sind.

Es gibt Unterschiede in dem Cadmiumgehalt der einzelnen Rohphosphaterze und damit auch im Cadmiumgehalt der daraus produzierten Phosphorsäuren. Es hat nicht an Versuchen gefehlt, den Cadmiumgehalt in den Rohphosphorsäuren zu vermindern, die aus Rohphosphaterzen mit hohem Cadmiumgehalt hergestellt werden. Die Entfernung des Cadmiums aus einer Rohphosphorsäure bereitete jedoch erhebliche Schwierigkeiten. Cadmiumsalze zeichnen sich durch eine sehr gute Löslichkeit, insbesondere in höher konzentrierten Säuren, aus.

Cadmium wird üblicherweise aus schwach sauren wässrigen Lösungen durch die Behandlung mit Schwefelwasserstoffen als schwerlösliches Sulfid ausgefällt. Nach den Angaben aus Gmelin's Handbuch der anorganischen Chemie, System Nr. 9, Teil B, Seite 100, kann Cadmium als schwerlösliches Sulfid ausgefällt werden, wenn die Acidität der Lösung nicht höher als 1,38 normal an HCl ist. Das heisst, dass die Fällbarkeit des Cadmiums auf Salzsäurekonzentrationen bis zu 5% begrenzt ist.

Nach der DE-A-2422902 ist es möglich, aus höher konzentrierten Phosphorsäuren mit einem $P_2O_5$-Gehalt von mehr als 45 Gewichtsprozenten unter einem Druck bis zu 50 atü und einer Verweilzeit bis zu 3 Stunden Cadmium aus Phosphorsäure auszufällen. Die Beispiele zeigen, dass ein Restwert von 10 bis 20%, bezogen auf den Einsatzwert des Cadmiums, in der Säure verbleibt. Das in der DE-A-2422902 offenbarte Verfahren führt nur zu einer Verminderung, nicht aber zu einer Entfernung des Cadmiums aus der Phosphorsäure. Abgesehen von dem unbefriedigenden Ergebnis der beschriebenen Verfahrensprozedur, erfordert das Verfahren selbst einen sehr grossen technischen Aufwand, da die Reaktion in rührbaren Druckgefässen vorgenommen wird.

In dem Journal of Radioanalytical Chemistry, Vol. 27 (1975), Seite 411-420, ist die Extraktion und Abtrennung von Mikromengen von Cadmiumhalogenider in Abwesenheit und Gegenwart von Phosphorsäure beschrieben. In dieser analytischen Untersuchung wird die Extraktion der Halogenide aus einer Mischung von reiner Salzsäure und reiner Phosphorsäure durchgeführt. Es wird der Verteilungskoeffizient der Cadmiumhalogenide durch Messung der Radioaktivität in der Lösungsmittel- und in der Säurephase bestimmt.

Die Ergebnisse zeigen, dass aus reiner Phosphorsäure in Abwesenheit von Salzsäure keine nennenswerte Extraktion des Cadmiums stattfindet. Erst durch den Zusatz von freier Salzsäure wird eine Extraktion des Cadmiums mit Hilfe einer 5%igen Amberlite LA-2-Lösung erreicht.

Die Arbeitsweise dieser analytischen Untersuchung, die in Gemischen von reiner Säure mit dotierten Cadmiumspuren durchgeführt wird, ist nicht auf die Cadmiumentfernung aus Phosphorsäure übertragbar. In der industriellen Praxis führt die Anwesenheit von freier Salzsäure in der Rohphosphorsäure, die nach dem Nassverfahren hergestellt wird, zu erheblichen Korrosionsproblemen in den Produktionsanlagen.

Rohphosphorsäuren enthalten je nach der Art des Rohphosphates noch eine Vielzahl von anderen Kationen, die in der Regel in einer wesentlich höheren Konzentration als Cadmium vorliegen. Dies gilt insbesondere für das Eisen. Bei der Durchführung des Extraktionsprozesses in Gegenwart von freier Salzsäure bilden sich bevorzugt die Eisenchlorokomplexe und blockieren durch die Reaktion mit dem Extraktionsmittel Amberlite LA-2 die Extraktion des Cadmiums.

Es ist auch möglich, Cadmium aus Rohphosphorsäure durch Extraktion mit organischen Lösungsmitteln zu entfernen. Die Vielzahl der bekannten Phosphorsäurereinigungsverfahren zeigen dazu technische Möglichkeiten. Bei diesen Verfahren wird eine reine Phosphorsäure gewonnen, in der neben dem Cadmium auch alle anderen Kationen aus der Phosphorsäure entfernt sind. Die Säuren sind in ihrer Reinheit vergleichbar mit der der thermischen Phosphorsäure. Durch die hohen Anforderungen an Qualität sind diese Verfahren aufwendig und sehr kostenintensiv. Die so gewonnenen Reinsäuren können aus Preisgründen im allgemeinen nicht für die Herstellung von Düngemitteln verwendet werden.

Die chemisch-technische Aufgabe bestand darin, ein einfaches Verfahren zu finden, das es gestattete, aus Rohphosphorsäuren handelsüblicher Konzentration gezielt das vorhandene Cadmium zu entfernen, ohne das

2

Qualitätsniveau der Säure, das heisst den Gehalt an anderen Kationen, wesentlich zu verändern. Das Verfahren sollte möglichst selektiv Cadmium aus den zu behandelnden Lösungen entfernen.

Die vorliegende Erfindung stellt ein Verfahren zur selektiven Entfernung von Cadmiumionen aus durch Aufschluß von Rohphosphaten mit Schwefelsäure erhaltener Rohphosphorsäure durch Flüssig-Flüssig-Extraktion ohne Zusatz von Halogenwasserstoffsäure und ohne den Gehalt der Säure an anderen Kationen wesentlich zu ändern, zur Verfügung, bei dem man die Rohphosphorsäure mit einem Chlorwasserstoffsäure-, Bromwasserstoffsäure- oder Jodwasserstoffsäure-Salz eines primären, sekundären oder tertiären Amins, das einen Alkylrest mit 8 bis 30 Kohlenstoffatomen, insbesondere 8 bis 18 Kohlenstoffatomen, hat und in einem mit Wasser, wäßrigen Salzlösungen und wäßrigen Säuren nicht mischbaren organischen Lösungsmittel gelöst ist, in Kontakt bringt, die wäßrige saure $P_2O_5$ enthaltende Lösung von der organischen Phase abtrennt und die isolierte, organische, Cadmium-Ionen enthaltende Phase mit einer wäßrigen Lösung so in Kontakt bringt, daß die Cadmium-Ionen von der wäßrigen Phase reextrahiert werden.

Es wurde überraschenderweise gefunden, dass bestimmte Alkylaminsalze gelöst in einem organischen Lösungsmittel hervorragend für die Extraktion von Cadmiumionen aus Rohphosphorsäure geeignet sind.

Es war für den Fachmann völlig überraschend, dass bestimmte Alkylaminsalze, gelöst in einem organischen Lösungsmittel, bevorzugt nur die Cadmiumionen aus Rohphosphorsäure zu extrahieren vermögen, während andere Schwermetallkationen in der wässrigen $P_2O_5$-Lösung verbleiben.

Als brauchbare Amin-Verbindungen zur Extraktion der Cadmiumionen aus Rohphosphorsäure, haben sich die organischen Lösungen folgender Salze erwiesen:

HCl    - Salz
HBr    - Salz
HJ     - Salz

Die folgende Tabelle zeigt die Brauchbarkeit von verschiedenen Aminsalzen anhand von Extraktionsversuchen an einer Phosphorsäure mit 45% $P_2O_5$ und 105 ppm Cd.

Die Extraktion wird im Phasenverhältnis 1:1 (Gewichts-Teile) mit einer 2%igen Aminsalz-Xylol-Lösung durchgeführt. Es wird der Cd-Gehalt in der Phosphorsäure vor und nach der Extraktion bestimmt.

Veränderung des Cd-Gehaltes durch die Extraktion

| Amin-Salz | | vor Extr. ppm Cd | nach Extr. ppm Cd | %-Abreicherung % v. Eins. |
|---|---|---|---|---|
| 1) | $H_3PO_4$-Salz | 105 | 105 | 0 |
| 2) | $(HPO_3)_n$-Salz | 105 | 105 | 0 |
| 3) | $H_2SO_4$-Salz | 105 | 105 | 0 |

| Amin-Salz | | vor Extr. ppm Cd | nach Extr. ppm Cd | %-Abreicherung % v. Eins. |
|---|---|---|---|---|
| 4) | HF-Salz | 105 | 105 | 0 |
| 5) | $H_2SiF_6$-Salz | 105 | 100 | 5 |
| 6) | HCl-Salz | 105 | 2 | 98 |
| 7) | HBr-Salz | 105 | 2 | 98 |
| 8) | HJ-Salz | 105 | 3 | 97 |
| 9) | HCN-Salz | 105 | 60 | 43 |
| 10) | HCNS-Salz | 105 | 75 | 29 |
| 11) | $H_3BBO_3$-Salz | 105 | 105 | 0 |
| 12) | Acetat-Salz | 105 | 105 | 0 |

Nach der Meinung der Fachwelt kann Cadmium durch Verwendung organischer Verbindungen nicht selektiv aus Rohphosphorsäure extrahiert werden. Es war deshalb bereits für den Fachmann überraschend, dass die selektive Extraktion von Cadmiumionen aus Rohphosphorsäure nach dem erfindungsgemässen Verfahren durchgeführt werden kann. Besonders überraschend war es aber, dass die Extraktion der Cadmiumionen bevorzugt im stark sauren Medium verläuft. Dadurch ist es erstmals möglich, quantitativ Cadmiumionen aus Rohphosphorsäure zu entfernen.

Die folgende Tabelle zeigt den Einfluss der $P_2O_5$-Konzentration auf die Extrahierbarkeit des Cadmiums. Die Extraktionen wurden mit reinen Phosphorsäuren durchgeführt, die mit $CdSO_4$-Lösungen auf eine Cd-Konzentration von ca. 100 ppm eingestellt waren. Die Extraktionen wurden einstufig im Phasenverhältnis 1:1 (Gew.-Teile) mit einer organischen Phase mit 1,0%iger Aminsalzkonzentration durchgeführt.

Cd-Extraktionen aus Phosphorsäure in Abhängigkeit von der $P_2O_5$-Konzentration

| vor Extraktion | | nach Extraktion | |
|---|---|---|---|
| $P_2O_5$ (%) | Cd (ppm) | Cd (ppm) | Abreicherung (% v.Eins.) |
| 5 | 110 | 100 | 9 |
| 15 | 110 | 97 | 12 |
| 25 | 107 | 72 | 33 |
| 35 | 108 | 24 | 78 |
| 45 | 105 | 3 | 97 |
| 57 | 110 | 2 | 98 |

Die Konzentration des Aminsalzes in dem organischen Lösungsmittel hat ebenfalls einen starken Einfluss auf die Extrahierbarkeit des Cadmiums aus Rohphosphorsäure. Am Beispiel von mit $CdSO_4$-Lösung aufgestockten Phosphorsäuren ergeben sich für die Cadmiumionen folgende Verteilungskoeffizienten:

| Säure-konzentration | Verteilungskoeffizient | | |
|---|---|---|---|
| | Aminsalz-Konzentration in der org. Phase | | |
| % $P_2O_5$ | 0,5% | 1,0% | 2,0% |
| 5,0 | 0,02 | 0,10 | 0,38 |
| 15,0 | 0,02 | 0,13 | 0,57 |
| 25,0 | 0,03 | 0,49 | 2,96 |
| 35,0 | 0,66 | 3,50 | 20,60 |
| 45,0 | 6,00 | 34,00 | 51,50 |
| 57,0 | 35,70 | 54,00 | 54,00 |

Das erfindungsgemässe Verfahren wird mit Extraktionsmitteln betrieben, die der chemischen Stoffklasse der Aminsalze von Halogenwasserstoffsäuren zuzuordnen sind. Für die Extraktion des Cadmiums sind sowohl die Halogenwasserstoffsalze der primären, sekundären und tertiären Amine geeignet; jedoch ist der erzielbare Extraktionsgrad bei der Verwendung von primärem, sekundärem und tertiärem Aminsalz unterschiedlich. Aus der folgenden Tabelle ergibt sich das Extraktionsverhalten für Cadmium aus Säuren durch Verwendung von primären, sekundären und tertiären Isononylaminsalzen der Chlorwasserstoffsäure unter vergleichbaren Versuchsbedingungen.

Die vergleichenden Extraktionsversuche wurden einstufig an einer cadmiumdotierten Phosphorsäure mit einem $P_2O_5$-Gehalt von 45% und einem Cadmiumgehalt von 175 ppm mit einer Xylol-Lösungsmittelphase mit einer überschüssigen Reagenzkonzentration von 0,04 mol/l im Phasenverhältnis von 1:1 (Gew.-Teile) durchgeführt.

| Art des Aminsalzes | Veränderung des Cd-Gehaltes in der Phosphorsäure (45%) | |
| --- | --- | --- |
| | vor der Extraktion (ppm Cd) | nach der Extraktion (ppm Cd) |
| prim. Isononylamin-HCl-Salz | 175 | 40 |
| sec. Diisononylamin-HCl-Salz | 175 | 11 |
| tert. Triisononylamin-HCl-Salz | 175 | 3 |

Das Salz des tertiären Amins hat die grösste Wirksamkeit bei der Extraktion des Cadmiums. Bereits nach einer Stufe ist das Cadmium nahezu vollständig aus der 45%igen Phosphorsäure entfernt. Die Verwendung der Salze der tertiären Amine stellt die bevorzugte Ausführungsform des erfindungsgemässen Verfahrens dar.

Ungeachtet des unterschiedlichen Extraktionsverhaltens der primären, sekundären und tertiären Aminsalze gegenüber einer stöchiometrisch unterschüssigen Menge an Cadmiumionen, sind doch alle drei Arten der Amine zu der Bildung einer Cadmiumverbindung gleichermassen fähig, wenn man eine stochiometrisch unterschüssige menge an Aminsalz, gelöst in einem organischen Lösungsmittel mit einer stark überschüssigen Menge an Cadmium, gelöst in einer 45%igen Phosphorsäure, durch Extraktion umsetzt. Aus diesen Versuchen lassen sich quantitative Aussagen über die molare Zuordnung von Cadmium zu Aminsalz machen. Aus der Vielzahl der untersuchten Amine ergeben sich folgende molare Belegungszahlen pro Mol Cadmium:

| Aminsalz | mol.Aminsalzbedarf pro Mol Cd |
| --- | --- |
| prim. Amin/HCl-Salz | 5– 7 |
| sek. Amin/HCl-Salz | 5–10 |
| tert. Amin/HCl-Salz | 5– 7 |

Bei dem Betrieb des erfindungsgemässen Verfahrens erfolgt die Auswatil der brauchbaren Amine anhand von drei Kriterien:

a) den Löseeigenschaften der Aminsalze in dem organischen Lösungsmittel zur Herstellung der organischen Phase,

b) dem spezifischen Extraktionsverhalten gegenüber der cadmiumhaltigen Säuren,

c) dem Trennverhalten der beiden Extraktionsphasen bei der Durchführung des Verfahrens.

Die primären, sekundären und tertiären Amine müssen einen Alkylrest mit einer Kohlenstoffatomanzahl von 8 bis 30, insbesondere von 8 bis 18 haben. Die Löslichkeit der Aminsalze in den organischen Lösungsmitteln wird durch die Länge des Alkylrestes und durch die Anzahl der Alkylreste im Aminmolekül beeinflusst. Manche Aminsalze führen bei der Extraktion zu der Ausbildung von Emulsionen, so dass die Trennung der Phasen verzögert wird. Die Neigung zur Emulsionsbildung wurde besonders bei einigen langkettigen primären und sekundären Aminen beobachtet. Bei der Verwendung der tertiären Amine wurde diese Beobachtung der Emulsionsbildung nicht gemacht.

Die Ausbildung der Emulsionen ist jedoch nicht allein von der Art der Amine abhängig; sie ist vielmehr die Folge von dem Zusammenspiel von vielen Faktoren, wie zum Beispiel der Art des organischen Lösungsmittels, der Viskosität der wässrigen Phase und der Intensität und Art des Mischens der Phasen bei der Durchführung der Extraktion. Durch Vorversuche ist fallweise zu klären, welche Aminsalzlösungen in welchen organischen Lösungsmitteln für die Durchführung brauchbar sind.

Die Herstellung des Reagenzes erfolgt in der Weise, dass man die Chlor-, Brom- oder Jodwasserstoffsäure an das freie Amin anlagert. Diese Prozedur kann ausserhalb des Verfahrensablaufes geschehen, indem man eine bekannte Menge an Amin im molaren Verhältnis 1:1 von Aminstickstoff zu Halogenwasserstoff mit einer entsprechenden Menge an umsetzt und das gebildete Salz isoliert und dieses im Bedarfsfalle in dem organischen Lösungsmittel auflöst.

Die Herstellung des Reagenzes kann auch in der Weise vorgenommen werden, dass man das Amin in einem organischen Lösungsmittel löst und die erhaltene Lösung mit einer wässrigen verdünnten Chlor-, Brom- oder Jodwasserstoffsäure durch intensives Mischen in Kontakt bringt, wobei sich das Reagenz in dem organischen Lösungsmittel bildet und darin in gelöster Form vorliegt. Diese Art der Reagensbereitung wird in Form eines Extraktionsprozesses durchgeführt. Es wird als bevorzugte Ausführungsform angewandet, wenn das erfindungsgemässe Verfahren kontinuierlich betrieben wird, wobei das organische Lösungsmittel mit dem Reagenz über Verfahrensstufen im Kreislauf geführt wird.

Das erfindungsgemässe Verfahren wird mit organischen Lösungsmitteln durchgeführt, die folgende Bedingungen erfüllen müssen:

Sie dürfen nicht mit Wasser, mit wässrigen Salzlösungen oder mit wässrigen Säuren mischbar sein. Die Nichtmischbarkeit mit Säuren muss noch bis hin in den hohen Konzentrationsbereich der Säuren gewährleistet sein. In umgekehiter Weise dürfen die organischen Lösungsmittel die genannten Stoffe wie Wasser, wässrige Salzlösungen oder wässrige Säuren nicht aufnehmen.

Die organischen Lösungsmittel müssen eine ausreichende Löslichkeit für die Amine, für die Halogenwasserstoffsalze der Amine und für die Cadmiumverbindung des Aminsalzes haben. Die organischen Lösungsmittel müssen inert gegenüber dem zu extrahierenden Medium und den dazu verwendeten Chemikalien sein. Sie dürfen mit diesen Stoffen selbst nicht reagieren.

Unter Berücksichtigung dieser Auswalkriterien haben sich folgende Gruppen von organischen Lösungsmitteln als brauchbar für das erfindungsgemässe Verfahren erwiesen:

a) aliphatische Kohlenwasserstoffe in Form von definierten Verbindungen, in Mischungen oder Destillationsfraktionen,

b) aromatische Kohlenwasserstoffe in Form von definierten Verbindungen, in Mischungen von Aromaten oder in Mischung von aliphatischen Kohlenwasserstoffen,

c) Halogenkohlenwasserstoffe in Form von definierten aliphatischen und/oder aromatischen Verbindungen oder in Mischung mit den vorgenannten Lösungsmitteln,

d) fernerhin können alle anderen nicht genannten Lösungsmittel oder Lösungsmittelgemische verwendet werden, soweit sie die obengenannten Auswahlkriterien erfüllen.

Die organische Lösung wird durch Auflösen des Extraktionsreagenzes in dem genannten organischen Lösungsmittel hergestellt. Üblicherweise wird das erfindungsgemässe Verfahren mit organischen Lösungen mit einer Konzentration von 0,1 bis 10 Gew.-%, vorzugsweise mit einer Konzentration von 0,2 bis 3,0 Gew.-% Reagenz betrieben.

Bei der Herstellung von höherprozentigen organischen Lösungen, insbesondere bei der Verwendung von unpolaren organischen Lösungsmitteln ist es empfehlenswert, die herzustellende organische Lösung mit Lösungsvermittler in kleinen Mengen zu versetzen.

Als Lösungsvermittler werden solche Stoffe verwendet, die die Löseeigenschaften der organischen Lösungen gegenüber den wässrigen Säuren oder wässrigen Salzlösungen nicht verändern, aber die Löslichkeit des Extraktionsreagenzes und dessen Cadmiumverbindung in dem organischen Lösungsmittel vergrössern. Als Lösungsvermittler haben sich Alkohole bewährt. Es werden langkettige, aliphatische Alkohole in Form von reinen Verbindungen, isomeren Gemischen oder Destillationsfraktionen wie zum Beispiel Oktanole, Decanole usw. verwendet. Weiterhin sind auch aromatische Alkohole, wie zum Beispiel Benzylalkohol als Lösungsvermittler brauchbar. Die Menge der Lösungsvermittler liegt in der Grössenordnung von 2 bis 10 Gew.-% bezogen auf die organische Lösung. Die anzuwendende Menge und Art an Lösungsvermittler ist durch Versuche mit den entsprechenden Aminen und organischen Lösungsmitteln von Fall zu Fall zu ermitteln.

Es ist empfehlenswert, das erfindungsgemässe Verfahren vorzugsweise mit solchen langkettigen Aminen und solchen organischen Lösungsmitteln und Reagenzkonzentrationen zu betreiben, dass auf die Verwendung von Lösungsvermittler verzichtet werden kann.

Das erfindungsgemässe Verfahren wird üblicherweise bei Normaltemperatur, das heisst in einem Temperaturbereich von 15-25°C betrieben. Es kann aber auch ohne Einschränkung bei höheren Temperaturen durchgeführt werden, wenn dies die Umstände erfordern. Es ist möglich, auch in einem Temperaturbereich zwischen 60 und 80°C zu arbeiten. Die obere Temperaturgrenze wird von der Art des organischen Lösungsmittels und dessen Dampfdruck bestimmt. Nach unten hin wird die Temperaturgrenze von dem Viskositätsverhalten der beiden flüssigen Phasen bestimmt. Ein starker Anstieg der Viskosität führt zu Störungen bei dem Mischen und Trennen der Phasen und damit zum Erliegen des Extraktionsprozesses.

Nach der Durchführung des Extraktionsprozesses ist das Cadmium in der abgetrennten organischen Phase angereichert. Aus dieser wird das Metallion durch einen Reextraktionsprozess entfernt. Die Reextraktion wird mit einer neutralen bis schwach sauer reagierenden wässrigen Lösung durchgeführt. Diese kann aus Salzlösungen oder auch aus Wasser ohne einen erhöhten Salzgehalt bestehen. Bei der Durchführung der Reextraktion wird die Cadmiumverbindung des Aminsalzes der Chlor-, Brom- oder Jodwasserstoffsäure gespalten. Das Cadmium wandert aus der organischen Phase zusammen mit einem mehr oder minder grossen Anteil der Chlor-, Brom- oder Jodwasserstoffsäure in die wässrige Phase und das führt zu einer Absenkung des pH-Wertes im Verlauf der Reextraktion.

Bei der Verwendung von Wasser als Reextraktionsmittel ist die Absenkung des pH-Wertes sehr stark, da die puffernde Wirkung des gelösten Salzes fehlt. Es ist erforderlich, die Reextraktion mit relativ grossen Flüssigkeitsmengen durchzuführen, was zu dem Anfall eines relativ verdünnten Cadmiumreextraktes führt.

Bei der Verwendung von salzhaltigen wässrigen Lösungen ist die Verminderung des pH-Wertes nicht so stark, besonders bei der Verwendung von solchen Salzlösungen, bei denen sich ein Pufferungssystem zwischen der abgespaltenen Halogenwasserstoffsäure und dem gelösten Salz in der wässrigen Phase ausbildet. Es ist zweckmässig, möglichst hochprozentige Salzlösungen zur Reextraktion einzusetzen. Die Trennung der Phasen erfolgt in kurzen Zeiten. Das Volumen der schweren Phase kann klein gehalten werden. Nach der Korrektur des pH-Wertes in der isolierten schweren Phase, kann diese erneut zur Reextraktion verwendet werden. Bei dieser Arbeitsweise fallen relativ kleine Volumenteile einer relativ konzentrierten Cadmium-Salzlösung an. Es ist zweckmässig, einen Teil der cadmiumhaltigen schweren Phase kontinuierlich aus dem Reextraktionsmittelkreislauf zu entnehmen und durch eine entsprechend grosse Menge an frischer Salzlösung zu ergänzen. Dadurch wird eine konstante Zusammensetzung des Reextraktes erzielt.

Als Salze zur Herstellung der salzhaltigen wässrigen Phase sind die löslichen Alkali- und/oder Ammoniumsalze von Sauerstoffsäuren geeignet. Die Salze der Sauerstoffsäure dürfen keine schwerlöslichen Verbindungen bei der Durchführung der Reextraktion bilden. Als brauchbar haben sich die wässrigen neutral bis schwach sauer reagierenden Lösungen der Alkali- und/oder Ammoniumsalze der Schwefelsäure, der Salpetersäure, der Phosphorsäure oder der Essigsäure erwiesen. Der Verwendung von Ammoniumsalzen der genannten Sauerstoffsäuren als Reextraktionsmittel ist der Vorzug zu geben, da die Gegenwart von Ammoniumionen in der wässrigen Reextraktionsphase dem Ausfällen von schwerlöslichen Cadmiumverbindungen entgegenwirkt.

Der Salzgehalt in den wässrigen neutralen bis schwach sauer reagierenden Lösungen wird nach oben hin durch die Löslichkeit der Salze begrenzt.

Nach der Reextraktion hat die cadmiumfreie organische Phase einen gewissen Anteil der aminsalzbildenden Anionen an die wässrige Phase abgegeben. In der organischen Phase liegt ein Teil des gelösten Amins als freie Base vor. Um die organische Phase erneut für die Extraktion von Cadmium verwenden zu können, ist es erforderlich, das in der organischen Phase befindliche Amin vollständig in das Salz der Chlorwasserstoffsäure, Bromwasserstoffsäure oder Jodwasserstoffsäure zu überführen.

Die Salzbildung findet in der organischen Phase statt und wird durch intensives Mischen mit einer wässrigen Chlorwasserstoffsäure, Bromwasserstoffsäure oder Jodwasserstoffsäure erreicht. Die dabei aus der wässrigen Phase aufgenommene Saüremenge entspricht der zur Salzbildung erforderlichen stöchiometrischen Menge. Nach dem Trennen der Phase ist die isolierte organische Phase erneut für die Extraktion von Cadmium einsetzbar.

Es ist zweckmässig, eine verdünnte wässrige Chlorwasserstoffsäure, Bromwasserstoffsäure oder Jodwasserstoffsäure für die Salzbildungsreaktion zu verwenden. In der Praxis haben sich wässrige Säuren mit einer Konzentration von 0,1 bis 3,0 ml/l, vorzugsweise 0,1 bis 1,0 mol/l bewährt, wobei es vorteilhaft ist, die wässrige Säure im mehrstufigen Gegenstrom mit der aminhaltigen organischen Phase zur Reaktion zu bringen.

Die wässrige Halogenwasserstoffsäurephase wird nach der Umsetzung mit dem Amin in der organischen Phase in dem Masse mit frischer Chlorwasserstoffsäure, Bromwasserstoffsäure oder Jodwasserstoffsäure nachgeschärft, dass sie erneut zur Aminsalzbildung in der organischen Phase verwendet werden kann.

Es war für den Fachmann weiterhin völlig überraschend, dass das erfindungsgemässe Verfahren eine hohe Selektivität für Cadmiumionen hat. Andere Kationen verbleiben bei der Extraktion als gelöste Salze in der wässrigen Säurephase. Dadurch wird eine Trennung des Cadmiums von den anderen mehrwertigen Kationen erreicht.

Die Selektivität für Cadmium zeigt sich in dem Vergleich der beiden folgenden Tabellen. In der ersten Tabelle ist die Zusammensetzung von Phosphorsäuren mit verschieden hohen $P_2O_5$-Konzentrationen, die gezielt mit Cadmium und anderen Kationen versetzt wurden, aufgetragen.

In der zweiten Tabelle ist die Zusammensetzung der gleichen Phosphorsäuren nach der Durchführung einer einstufigen Extraktion mit einer organischen Phase mit 2%iger Aminsalzkonzentration im Phasenverhältnis 1:1 (Gew.-Teile) angegeben.

Zusammensetzung der Phosphorsäuren vor der Extraktion

EP 0 094 630 B2

| P$_2$O$_5$ % | Cd ppm | Zn ppm | Co ppm | Ni ppm | Cu ppm | Fe$^{III}$ ppm | U$^{IV}$ ppm |
|---|---|---|---|---|---|---|---|
| 30 | 1050 | 10000 | 11700 | 10000 | 9400 | 9900 | 200 |
| 40 | 1050 | 10000 | 11700 | 10000 | 9400 | 9900 | 200 |
| 50 | 1050 | 10000 | 11700 | 10000 | 9400 | 9900 | 200 |

Zusammensetzung der Phosphorsäuren nach der Extraktion

| P$_2$O$_5$ % | Cd ppm | Zn ppm | Co ppm | Ni ppm | Cu ppm | Fe$^{III}$ ppm | U$^{IV}$ ppm |
|---|---|---|---|---|---|---|---|
| 30 | 410 | 10000 | 11700 | 10000 | 9400 | 9900 | 195 |
| 40 | 370 | 10000 | 11600 | 10000 | 9500 | 10000 | 202 |
| 50 | 350 | 10000 | 11700 | 10000 | 9400 | 10000 | 200 |

Es zeigt sich, dass trotz des Überschusses jedes anderen Kations gegenüber dem Cadmium in den Phosphorsäuren durch die Extraktion mit Ausnahme des Cadmiums keine nennenswerten Veränderungen in der Zusammensetzung der wässrigen sauren Phase hervorgerufen werden.

Die Übertragung der Extraktion auf Filtersäuren, die nach dem Nassverfahren hergestellt wurden, zeigt, dass sich diese Extraktion ohne Einschränkung darauf anwenden lässt. Dieses Ergebnis ist überraschend, da die Filtersäuren neben Schwefelsäure, Flusssäure und Kieselfluorwasserstoffsäure noch grosse Mengen an verschiedenen gelösten Metallsalzen enthalten. Der Gehalt an diesen anderen Metallionen liegt in ihrer Gesamtheit in der Grössenordnung eines 1000 bis 20 000-fachen Überschusses, bezogen auf das darin vorhandene Cadmium. Der Fachmann konnte deshalb nicht erwarten, dass in Gegenwart eines derartigen Überschusses der verschiedensten Metallionen die Extraktion des Cadmiums selektiv verläuft. Die Versuche wurden mit vier Filtersäuren, die aus unterschiedlichsten Rohphosphatharzen hergestellt worden sind, durchgeführt.

Die nachfolgende Tabelle zeigt die Auswahl und die Zusammensetzung der Filtersäuren:

| Herkunft der Roh-phosphorsäure | Zusammensetzung | | | bezogen auf P$_2$O$_5$ | | Relation |
|---|---|---|---|---|---|---|
| | P$_2$O$_5$ | Gesamt-Katio-nen (mval) | Cd (ppm) | Gesamt-Katio-nen (mval) | Cd (mval) | Cd/Gesamt-Ka-tionen (mval) |
| Marokko | 29,9 | 57,4 | 15,5 | 192 | 0,093 | 1:2065 |
| Togo | 26,8 | 58,1 | 25,8 | 209 | 0,166 | 1:12690 |
| Florida I | 30,0 | 132,9 | 6,6 | 443 | 0,039 | 1:11359 |
| Florida II | 29,0 | 164,2 | 4,3 | 608 | 0,029 | 1:20966 |

Die Extraktionen wurden einstufig im Phasenverhältnis 1:1 (Gew.-Teilen) mit einer organischen 2%igen Aminsalzlösung durchgeführt. In der extrahierten Filtersäure wurde der verbliebene Cadmiumgehalt bestimmt. Die Ergebnisse sind in der Tabelle zusammengestellt.

| Filtersäure (Herkunft) | Cd-Gehalt | | Abreiche-rung % v.Einsatz |
|---|---|---|---|
| | vorher | nachher | |
| | ppm | ppm | % |
| Marokko | 15,5 | 0,3 | 98 |
| Togo | 25,8 | 0,5 | 98 |
| Florida I | 6,6 | 0,3 | 96 |
| Florida II | 4,3 | 0,3 | 94 |

8

Beispiel 1

Eine Phosphorsäure, die nach dem Nassverfahren aus Togo-Phosphaterz hergestellt, geklärt und aufkonzentriert worden war, hatte folgende Analysendaten:

$P_2O_5$ = 52,6 %
$H_2SO_4$ = 4,4%
HF = 0,7%
Fe = 1,1%
Al = 0,5%
Cr = 0,2 %
Mg = 0,09 %
Cu = 0,01 %
Cd = 60 ppm

Zur Entfernung des Cadmiums wurde die Säure über die Zeitspanne einer Woche kontinuierlich in einer vierstufigen Flüssig/Flüssig-Gegenstromextraktionsanlage in Mixer-Settler-Bauweise mit einer organischen Phase behandelt, die folgende Zusammensetzung hatte:

49,0% Xylol
49,0% aliph. Kohlenwasserstoff (Sdp. 200-240°C)
2,0% HCl-Salz des Tridodecylamins

Die Extraktion wurde im Phasenverhältnis 1:3 (Gewichtsteile organische Phase zu Gewichtsteile wässrige Phase) betrieben. Nach dem Trennen der Phasen wurde die organische Phase mit einer wässrigen Lösung, bestehend aus einer 10%igen Diammonsulfatlösung im Phasenverhältnis 10:1 (Gewichtsteile organische Phase zu Gewichtsteile wässrige Phase) kontinuierlich in einer dreistufigen Flüssig-Flüssig-Gegenstromextraktionsanlage in Mixer-Settler-Bauweise behandelt.

Die aus der Reextraktionsstufe ablaufende organische Phase wurde kontinuierlich in einer weiteren dritten zweistufigen Flüssig-Flüssig-Gegenstromextraktionsanlage in Mixer-Settler-Bauweise mit einer 2,0%igen Salzsäurelösung im Phasenverhältnis 10:1 (Gewichtsteile organische Phase zu Gewichtsteile wässrige Phase) behandelt. Die ablaufende organische Phase wurde kontinuierlich als leichte Phase in die erste Extraktionsstufe des Verfahrens rezirkuliert. Die ablaufende wässrige Lösung wurde mit konzentrierter Salzsäure nachgeschärft und erneut zur Salzbildung des in der organischen Phase befindlichen Amins verwendet.

Nachdem sich alle Stufen des Verfahrens im stationären Zustand befanden, wurden folgende Analysendaten in ausgehenden wässrigen Phasen gemessen:

Ablaufende behandelte Phosphorsäure:
$P_2O_5$ = 52,6%
$H_2SO_4$ = 4,4%
HF = 0,7%
Fe = 1,1%
Al = 0,5%
Cr = 0,2%
Mg = 0,09%
Cu = 0,01%
Cd = <1 ppm

Ablaufende wässrige Reextraktionslösung:
$SO_3$ = 6,05%
Cl = 0,81%
$P_2O_5$ = 0,90%
Cd = 0,18%
$NH_3$ = 2,58%

Ablaufende wässrige verdünnte Salzsäure:
HCl = 1,10%
$SO_3$ = 0,10%
$P_2O_5$ = 0,01%

Die anfallende wässrige Reextraktionslösung, die das gesamte Cadmium aus der Phosphorsäure enthielt, wurde chargenweise mit einer 10%igen Sodalösung neutralisiert, das Cadmium als Carbonat ausgefällt, abfiltriert und deponiert. Das ablaufende Filtrat hatte einen pH-Wert von 10,2, der Cd-Gehalt war <1 ppm.

Beispiel 2

Eine Filtersäure, die nach dem Nassverfahren aus marokkanischem Phosphaterz hergestellt und deren HF- und As-Gehalt durch Nachbehandlung für die Herstellung von Dicalciumphosphonaten abgesenkt worden war, enthielt:

30,3% $P_2O_5$

17 ppm Cd

Aus dieser Säure wurde kontinuierlich in der in Beispiel 1 beschriebenen Verfahrensweise das vorhandene Cadmium extrahiert und weiterverarbeitet. Im Gegensatz zu Beispiel 1 wurde als organische Phase eine Lösung, bestehend aus:

98,4% Xylol

1,6% Diisononylaminhydrochlorid

für die Extraktion des Cadmiums benutzt. Die Extraktion wurde im Phasenverhältnis 1:10 (Gewichtsteile organische Phase zu Gewichtsteile wässrige Phase) durchgeführt. Nach der Extraktion war der Cadmiumgehalt bei sonst unveränderten Analysen der Säure auf 0,5 ppm abgesenkt.

## Patentansprüche

1. Verfahren zur selektiven Entfernung von Cadmiumionen aus durch Aufschluß von Rohphosphaten mit Schwefelsäure erhaltener Rohphosphorsäure durch Flüssig-Flüssig-Extraktion ohne Zusatz von Halogenwasserstoffsäure und ohne den Gehalt der Säure an anderen Kationen wesentlich zu ändern, bei dem man die Rohphosphorsäure mit einem Chlorwasserstoffsäure-, Bromwasserstoffsäure- oder Jodwasserstoffsäure-Salz eines primären, sekundären oder tertiären Amins, das einen Alkylrest mit 8 bis 30 Kohlenstoffatomen, insbesondere 8 bis 18 Kohlenstoffatomen, hat und in einem mit Wasser, wäßrigen Salzlösungen und wäßrigen Säuren nicht mischbaren organischen Lösungsmittel gelöst ist, in Kontakt bringt, die wäßrige saure $P_2O_5$ enthaltende Lösung von der organischen Phase abtrennt und die isolierte, organische, Cadmium-Ionen enthaltende Phase mit einer wäßrigen Lösung so in Kontakt bringt, daß die Cadmium-Ionen von der wäßrigen Phase reextrahiert werden.

2. Verfahren nach Anspruch 1, dadurch gekennzeichnet, dass das Aminsalz das Salz der Chlorwasserstoffsäure mit einem primären, sekundären oder tertiären Amin, mit einem Alkylrest von 8 bis 30 Kohlenstoffatomen, insbesondere von 8 bis 18 Kohlenstoffatomen, ist.

3. Verfahren nach Anspruch 1 und 2, dadurch gekennzeichnet, dass die wässrige Lösung zur Reextraktion der Cadmium-Ionen aus der organischen Phase aus den wässrigen Lösungen der Salze von Sauerstoffsäuren besteht.

4. Verfahren nach Anspruch 1 bis 3, dadurch gekennzeichnet, dass die wässrige Lösung zur Reextraktion der Cadmium-Ionen aus der organischen Phase aus den wässrigen Lösungen der Ammoniumsalze von Sauerstoffsäuren besteht.

5. Verfahren nach Anspruch 1 und 2, dadurch gekennzeichnet, dass die wässrige Lösung zur Reextraktion der Cadmium-Ionen aus der organischen Phase aus Wasser besteht.

6. Verfahren nach Anspruch 1 bis 5, dadurch gekennzeichnet, dass die wässrige Lösung zur Reextraktion der Cadmium-Ionen aus der organischen Phase einen pH-Wert von 2 bis 7 hat.

## Claims

1. A process for the selective removal of cadmium ions from crude phosphoric acid obtained by decomposition of phosphatic ores by means of sulfuric acid by liquid-liquid extraction without the addition of halogen hydracid and without substantially changing the content of other cations in said acid, wherein the crude phosphoric acid is brought in contact with a salt of hydrochloric, hydrobromic or hydroiodic acid with a primary, secondary or tertiary amine containing an alkyl radical of between 8 and 30 carbon atoms, especially between 8 and 18 carbon atoms, and which is dissolved in an organic solvent which is immiscible with water, aqueous salt solutions and aqueous acids, the aqueous acid, $P_2O_5$ containing solution is sepa-

rated from the organic phase, and the separated organic phase containing cadmium ions is brought in contact with an aqueous solution in a manner that the cadmium ions are re-extracted into the aqueous phase.

2. A process according to claim 1, characterized in that the amine salt is the salt of hydrochloric acid with a primary, secondary or tertiary amine with an alkyl radical of between 8 and 30 carbon atoms, especially between 8 and 18 carbon atoms.

3. A process according to claims 1 and 2, characterized in that the aqueous solution for the re-extraction of the cadmium ions from the organic phase consists of the aqueous solution of the salts of oxygen acids.

4. A process according to claims 1 to 3, characterized in that the aqueous solution for the re-extraction of the cadmium ions from the organic phase consists of the aqueous solution of the ammonium salts of oxygen acids.

5. A process according to claims 1 and 2, characterized in that the aqueous solution for the re-extraction of the cadmium ions from the organic phase consists of water.

6. A process according to claims 1 to 5, characterized in that the aqueous solution for the re-extraction of the cadmium ions from the organic phase has a pH-value of between 2 and 7.

**Revendications**

1. Procédé pour l'élimination sélective des ions cadmium de l'acide phosphorique minéral obtenu par attaque de l'acide sulfurique sur des phosphates minéraux, par une extraction liquide-liquide sans addition d'hydracide halogéné et sans modifier sensiblement la concentration de l'acide en d'autres ions,
selon lequel
on met en contact l'acide phosphorique minéral avec un sel de l'acide chlorhydrique, de l'acide bromhydrique ou de l'acide iodhydrique et d'une amine primaire, secondaire ou tertiaire ayant un radical alkyle de 8 à 30 atomes de carbone et plus spécialement de 8 à 18 atomes de carbone et qui est dissous dans un solvant organique non miscible à l'eau, aux solutions salines aqueuses et aux solutions acides aqueuses,
on sépare la solution acide aqueuse contenant $P_2O_5$, de la phase organique et on met en contact la phase organique isolée contenant les ions cadmium avec une solution aqueuse de manière à réextraire les ions cadmium de la phase aqueuse.

2. Procédé selon la revendication 1, caractérisé en ce que le sel d'amine est le sel de l'acide chlorhydrique et d'une amine primaire, secondaire ou tertiaire avec un radical alkyle de 8 à 30 atomes de carbone, et plus spécialement de 8 à 18 atomes de carbone;

3. Procédé selon les revendications 1 et 2, caractérisé en ce que la solution aqueuse pour la réextraction des ions cadmium de la phase organique est constituée de solution aqueuse de sels d'acides oxygénés.

4. Procédé selon les revendications 1 à 3, caractérisé en ce que la solution aqueuse pour la réextraction des ions cadmium de la phase organique est constituée de la solution aqueuse du sel d'ammonium d'acides oxygénés.

5. Procédé selon les revendications 1 et 2, caractérisé en ce que la solution aqueuse pour la réextration des ions cadmium de la phase organique est constituée par l'eau.

6. Procédé selon les revendications 1 à 5, caractérisé en ce que la solution aqueuse pour la réextraction des ions cadmium de la phase organique a un pH de 2 à 7.